(19) Europäisches Patentamt
European Patent Office
Office européen des brevets

(11) **EP 2 064 086 B1**

(12) **FASCICULE DE BREVET EUROPEEN**

(45) Date de publication et mention de la délivrance du brevet:
**06.10.2010 Bulletin 2010/40**

(51) Int Cl.:
***B60K 28/16*** *(2006.01)*

(21) Numéro de dépôt: **07848322.9**

(22) Date de dépôt: **03.08.2007**

(86) Numéro de dépôt international:
**PCT/FR2007/051772**

(87) Numéro de publication internationale:
**WO 2008/031961 (20.03.2008 Gazette 2008/12)**

(54) **PROCEDE D'ANTI-PATINAGE AU DEMARRAGE D'UN VEHICULE AUTOMOBILE**

ANTRIEBSSCHLUPFREGELUNGSVERFAHREN ZUR VERMEIDUNG DES DURCHDREHENS DER RÄDER BEIM STARTEN EINES KRAFTFAHRZEUGES

TRACTION CONTROL METHOD TO PREVENT THE WHEELS FROM SPINNING UPON STARTUP IN A MOTOR VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.09.2006 FR 0608090**

(43) Date de publication de la demande:
**03.06.2009 Bulletin 2009/23**

(73) Titulaire: **Renault SAS**
**92100 Boulogne Billancourt (FR)**

(72) Inventeurs:
• **CLAEYS, Xavier**
**F-78000 Versailles (FR)**
• **LEMINOUX, Gérald**
**F-78980 Longnes (FR)**
• **MARSILIA, Marco**
**F-92130 Issy Les Moulineaux (FR)**

(56) Documents cités:
DE-A1- 4 129 984    DE-A1- 10 238 218
DE-A1- 10 239 120    DE-A1- 19 509 494

EP 2 064 086 B1

**Description**

L'invention concerne un procédé d'anti-patinage au démarrage d'un véhicule automobile par contrôle du glissement des roues motrices avant ou arrière, sur route à adhérence symétrique.

Le contrôle du glissement d'une roue motrice est utilisé dans la régulation anti-patinage à l'entraînement, ASE, qui consiste à diminuer le couple moteur appliqué par le moteur du véhicule aux roues en cas de glissement d'au moins une roue motrice au-delà d'un premier seuil de glissement, puis à augmenter de nouveau ledit couple moteur lorsque le glissement passe sous un seuil inférieur au premier. Cette adaptation du couple moteur est automatique lors des démarrages ou des accélérations du véhicule sur une route à faible adhérence, au contact de laquelle les roues motrices patinent rapidement. L'invention concerne la gestion du glissement des roues motrices à l'aide d'un actionneur de type moteur thermique ou électrique, cette stratégie intervenant dans les situations de départ au glissement d'une roue quand l'effort appliqué à la roue est moteur ou freineur, dans le cas particulier du démarrage du véhicule à basse vitesse, inférieure à un seuil de quelques km/h.

Une solution actuelle est décrite dans le brevet FR 2 838 385 au nom de BOSCH. Elle consiste en un calcul du couple moteur nécessaire pour fournir le couple adapté au démarrage. Ce couple est fonction du régime moteur. Cette solution ne propose pas réellement une régulation en vitesse du véhicule dans la phase de démarrage. Elle est donc plus sensible aux perturbations extérieures comme la pente de la route par exemple, c'est pourquoi le couple ainsi calculé dépend de la pente.

DE 102 39 120 A1 décrit un procédé de contrôle de glissement avecdeux seuils ($\lambda_1,\lambda_2$), avec $\lambda_1$ étant inférieur à $\lambda_2$, et un mode de régulation en boucle fermée si l'écart est supérieur au seuil $\lambda_2$, voir alinéas 30 et 31, Figure 1, avec une régulation ASR. D1 ne divulgue pas un mode de régulation en boucle ouverte. Dans D1, si l'écart est inférieur au seuil $\lambda_1$, il n'y a plus de régulation.

Le but de l'invention est de proposer un procédé de contrôle du glissement des roues motrices d'un véhicule au démarrage qui s'adapte aux différentes conditions d'adhérence des roues, définie par l'écart entre la vitesse des roues de l'essieu moteur et la vitesse du véhicule, par deux modes de régulation différents, qui sont actionnés non pas simultanément mais successivement. Il comprend en particulier une vraie régulation en boucle fermée. Cette invention s'apparente à un mode de rampage sur faible adhérence, grâce à une structure de commande plus robuste et plus facile à régler que dans les solutions antérieures,

Pour cela, un premier objet de l'invention est un procédé de contrôle du glissement des roues motrices d'un véhicule automobile par régulation du couple moteur, délivré aux roues par l'actionneur du véhicule, dans le cas où elles dépassent un seuil prédéfini de glissement, caractérisé en ce que, lors de la détection d'une situation de démarrage à une vitesse inférieure à un seuil défini et sur une route à adhérence symétrique faible, les roues motrices patinent, il applique deux modes de régulation du couple moteur différents selon l'écart entre la vitesse des roues de l'essieu moteur et la vitesse du véhicule, soit, dans le cas où l'écart est supérieur à un premier seuil déterminé, un mode de régulation en boucle fermée par asservissement de la vitesse de rotation des roues à une consigne de vitesse déterminée à partir d'une consigne de régime moteur et, dans le cas où l'écart est inférieur à un deuxième seuil déterminé inférieur au premier seuil, un mode de régulation du couple moteur en boucle ouverte.

Selon une caractéristique du procédé de contrôle, la consigne de vitesse de régulation $r\dot{\theta}_r^d$ des roues motrices varie selon une droite décroissante initialisée en fonction du signe de la dérivée du glissement, convergeant en un temps prédéfini $t_{trans}$ d'une vitesse initiale maximale $V_{Emax}$ vers la valeur $V_{Smin}$ choisie de telle sorte que le véhicule décolle et ne calle pas, selon l'équation suivante :

$$r\dot{\theta}_r^d = K * t + V_{E\max} \quad \text{avec } K = \frac{V_{E\max} - V_{S\min}}{t_{trans}}$$

Selon une caractéristique du procédé de contrôle, la combinaison desdits deux modes de régulation du couple moteur est une commutation commandée par une fonction logique d'activation en fonction de l'écart entre la vitesse des roues de l'essieu moteur et la vitesse du véhicule par rapport aux seuils de déclenchement de la commande en boucle fermée et de la commande en boucle ouverte, pour une vitesse du véhicule inférieure à un seuil donné, et en ce que ces deux modes sont arrêtés quand l'écart diminue sous le seuil de déclenchement du mode en boucle ouverte et que la valeur absolue de la différence entre le couple moteur et la consigne du conducteur est inférieure à un talon de couple minimal.

Selon une caractéristique du procédé de contrôle, la consigne de régime moteur $V_{Smin}$ est fonction du type de moteur du véhicule, thermique ou électrique.

D'autres caractéristiques et avantages de l'invention apparaîtront à la lecture de la description d'un exemple de réalisation, illustrée par les figures suivantes qui sont :

- la figure 1 : les variations simultanées de la vitesse du véhicule au démarrage et de la vitesse des roues motrices en cas de glissement,
- la figure 2 : un schéma de principe du procédé anti-patinage selon l'invention,
- la figure 3 : un schéma fonctionnel de la phase de calcul de la consigne de vitesse de rotation des roues motrices, au démarrage, selon l'invention,
- la figure 4 : un organigramme des différentes étapes du procédé selon l'invention,
- la figure 5 : les différents seuils de transition de l'écart entre la vitesse des roues de l'essieu moteur et la vitesse du véhicule, entre les modes de régulation du couple moteur, selon l'invention.

Le procédé de contrôle du glissement des roues d'un véhicule selon l'invention, dans le cadre d'une régulation anti-patinage ASR, intervient dans les situations de départ au glissement, l'effort extérieur appliqué aux roues étant moteur ou freineur, alors que la vitesse du véhicule est inférieure à un seuil de l'ordre de quelques km/h, c'est-à-dire alors que le véhicule est en situation de démarrage.

Le procédé selon l'invention est appliqué de plus dans les phases de glissement sur route à adhérence symétrique, c'est-à-dire que les deux roues de l'essieu moteur du véhicule, qu'il soit avant ou arrière, glissent simultanément.

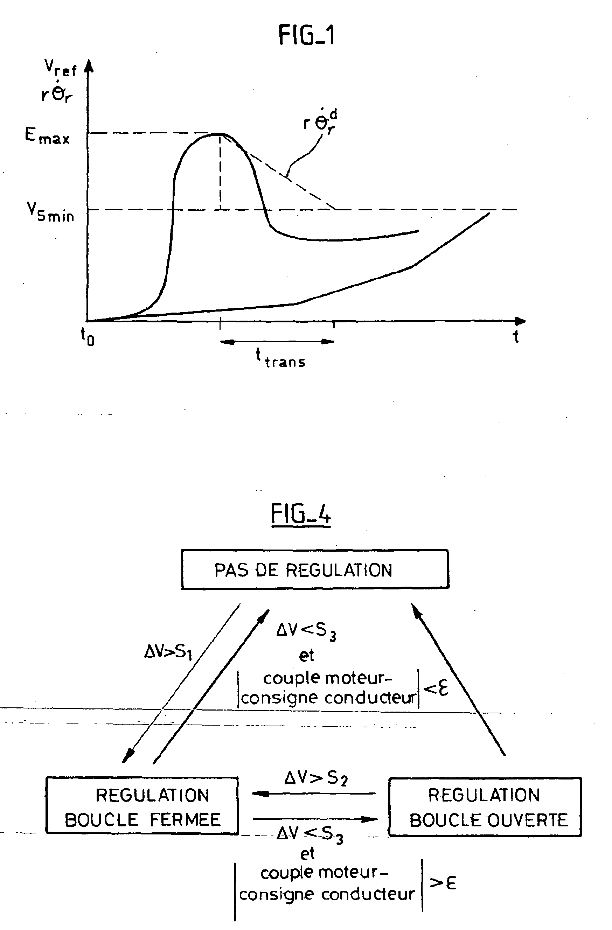

La figure 1 représente les variations temporelles simultanées de la vitesse $V_{ref}$ du véhicule au démarrage à l'instant $t_0$ et celles de la vitesse $r\dot{\theta}_r$ des roues motrices en cas de platinage. On constate que la vitesse $r\dot{\theta}_r$ des roues motrices au démarrage croît très rapidement et ne suit pas du tout la progression de la vitesse $V_{ref}$ du véhicule, le glissement des roues est alors très important. Or à basse vitesse et en situation de patinage, il n'est pas souhaitable de limiter le glissement des roues motrices à des valeurs trop faibles comme il est possible de le faire lorsque le véhicule est lancé à une vitesse de roulage supérieure à un seuil minimal $V_{Smin}$, pour les raisons suivantes:

- il faut éviter les risques de calage du moteur thermique du véhicule par une chute de son régime,
- il faut éviter de faire chuter trop fortement le régime du moteur du véhicule, qu'il soit thermique ou électrique, pour des raisons d'agrément de conduite car le conducteur aurait une mauvaise perception de la motricité,
- les efforts à très basse vitesse sont de nature différente des efforts à plus haute vitesse et il est préférable de faire glisser davantage les roues pour vaincre les frottements secs,
- un contrôle en glissement, tel qu'utilisé en phase de roulage du véhicule, n'offre pas de bonnes prestations à faible vitesse et il est donc préférable d'appliquer un contrôle en vitesse selon une consigne plus facilement paramétrable. A faible vitesse, par exemple 2 km/h, 15% de glissement représente 2.3 km/h, de sorte qu'il vaut mieux raisonner en vitesse.

L'invention consiste à générer une consigne de vitesse paramétrable lors de la mise au point du véhicule, dans le but de contrôler un démarrage avec perte d'adhérence due à l'emballement des roues motrices lié à l'application d'un couple moteur trop élevé. Selon les technologies des actionneurs, moteur thermique ou moteur électrique, le seuil minimal de régime $V_{Smin}$ au-dessus duquel le véhicule n'est plus considéré en situation de décollage n'est pas le même :

- pour un moteur thermique, qui fonctionne mal à bas régime, le procédé selon l'invention choisit un seuil de vitesse $V_{Smin}$ relativement élevé, correspondant au moins au régime de ralenti de 800 tours/minute, voire au-delà pour pallier certaines situations délicates, comme une pente, soit une vitesse linéaire de roue entre 7 et 15 km/h,
- pour un moteur électrique, le seuil de vitesse $V_{Smin}$ correspond au régime idéal pour lancer le véhicule en sortant de la zone de « roulement sans glissement » de l'ordre de 1 à 5 km/h.

Ainsi, la consigne de vitesse de rotation des roues motrices est établie en fonction de ce seuil de vitesse $V_{Smin}$ du véhicule, pendant la phase de démarrage, qui est fonction du type de moteur.

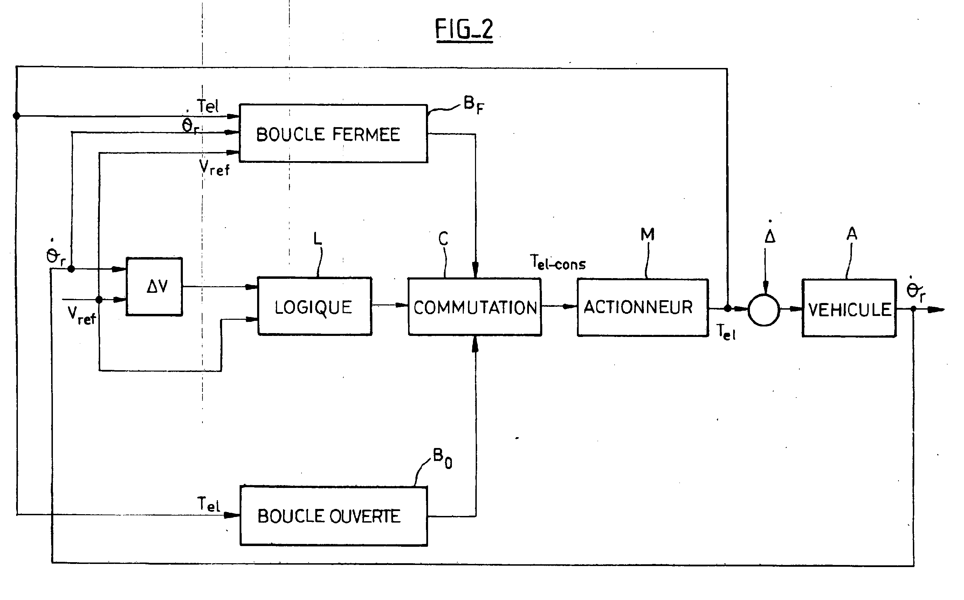

La figure 2 est un schéma de principe du procédé anti-patinage selon l'invention, appliquant deux modes de régulation différents du couple moteur $T_{el}$ en fonction de l'écart $\Delta V$ entre la vitesse des roues de l'essieu moteur et la vitesse du véhicule.

Un premier mode de régulation, en boucle fermée, par asservissement de la vitesse de rotation $\theta_r$ des roues à une consigne $\dot{\theta}_r^d$, est appliqué lorsque l'écart de vitesse est supérieur à un premier seuil $S_1$ déterminé par mise au point. Ce seuil S1 correspondant à un patinage avéré, est relativement important. La consigne $\dot{\theta}_r^d$ est déterminée par rapport au seuil de vitesse $V_{Smin}$ au-delà duquel le véhicule n'est plus en phase de démarrage. Cette boucle fermée

$B_F$ délivre une consigne de couple $T_{el-cons}$ au moteur M, thermique ou électrique, du véhicule qui va appliquer un couple moteur $T_{el}$ réel aux roues motrices. Mais le véhicule est couplé à l'environnement, en particulier à la route, qui apporte une perturbation se traduisant par le glissement des pneus. La vitesse $\Delta V$ de glissement relatif est définie par l'écart entre la vitesse longitudinale $r\dot\theta_r$ des roues de l'essieu moteur et la vitesse $V_{ref}$ du véhicule, selon la relation $(E_1)$ suivante :

$$(\mathrm{E_1}) \qquad \Delta V = r\dot\theta_r - V_{ref}$$

$r$ étant le rayon d'une roue, $\dot\theta_r$, la vitesse de rotation de la roue et $V_{ref}$ la vitesse longitudinale du véhicule.

L'objet de la régulation en boucle fermée est de rejeter les perturbations modélisées ici par un glissement, la mise au point de la commande étant réalisée dans ce but.

Le couple moteur $T_{el}$ délivré par le moteur M, la vitesse de rotation $\dot\theta_r$ des roues ainsi que la vitesse $V_{ref}$ du véhicule sont envoyés à l'entrée de la boucle fermée $B_F$ destinée à réguler la vitesse $\dot\theta_r$ de rotation des roues sur la consigne $\dot\theta_r^d$ correspondant à la vitesse désirée par le conducteur $V_{ref}$.

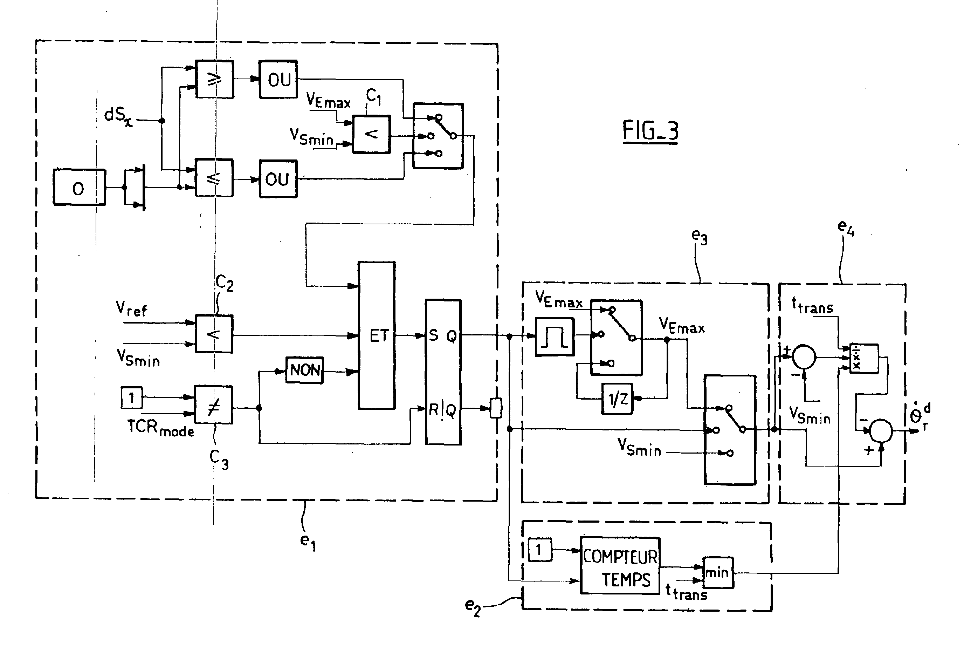

Selon une caractéristique du procédé selon l'invention, cette consigne de vitesse de rotation $\dot\theta_r^d$ des roues motrices varie selon une rampe de vitesse permettant de rejoindre la consigne de vitesse minimal $V_{Smin}$ durant la phase de démarrage. Comme le montre le schéma fonctionnel de la figure 3, le calcul de la consigne $\dot\theta_r^d$ de vitesse des roues motrices comprend une première étape e1) d'établissement des conditions de son déclenchement à partir des informations suivantes :

- $V_{ref}$ la vitesse estimée ou mesurée du véhicule,
- $V_{Emax}$ la vitesse maximale de l'essieu moteur,
- $dS_X$ la dérivée du glissement des roues motrices,
- $TCR_{mode}$ l'indicateur de l'entrée dans une phase de régulation en glissement, à basse vitesse,
- $V_{Smin}$ la consigne de vitesse minimale.

Le calcul de la consigne $\dot\theta_r^d$ de vitesse est déclenché si les trois conditions suivantes sont remplies :

- la vitesse $V_{ref}$ du véhicule est inférieure à la consigne $V_{Smin}$ de vitesse minimale, indiquant que le véhicule est en phase de démarrage,
- l'indicateur $TCR_{mode}$ de l'entrée dans une phase de régulation en glissement, à basse vitesse est différent de 1, signifiant qu'aucune régulation n'est déclenchée,
- la vitesse des roues s'infléchit dans la direction du seuil $V_{Smin}$ de vitesse, c'est-à-dire que le signe de la dérivée du glissement $dS_X$, indiquant la tendance du régime des roues motrices par rapport à la vitesse $V_{ref}$ de référence du véhicule, doit être, soit négatif avec la vitesse maximale $V_{Emax}$ de l'essieu moteur doit être supérieure au seuil $V_{Smin}$ de vitesse, soit positif avec la vitesse maximale $V_{Emax}$ de l'essieu moteur doit être inférieure au seuil $V_{Smin}$ de vitesse. Cela permet de limiter des actions correctrices trop fortes au démarrage.

Le calcul de la consigne $\dot\theta_r^d$ comprend deux étapes simultanées suivantes, déclenchées par l'étape précédente, dont une étape e2) d'initialisation d'un compteur temps pour incrémenter une rampe de décroissance de la vitesse $\dot\theta_r$ de rotation des roues motrices vers le seuil $V_{Smin}$ de vitesse, la durée maximale $t_{trans}$ de cette transition entre ces deux valeurs de vitesse étant un paramètre de réglage qui est calibré sur plusieurs scénarii de roulage, sur sol plat comme sur sol en pente notamment. Il comprend également une étape e3) de mémorisation de la vitesse $V_{Emax}$ des roues motrices à l'instant du déclenchement du calcul, dit régime initial maximal à partir duquel est calculée, dans une quatrième étape e4), la pente K de la rampe de décroissance de la vitesse $r\dot\theta_r$ des roues motrices vers le seuil $V_{Smin}$ de vitesse. Cette pente K est égale au rapport de la différence entre le régime maximal initial des roues - motrices et-le-seuil $V_{Smin}$ de vitesse sur la durée de transition $t_{trans}$ selon l'équation suivante :

$$\overline{K} = \frac{V_{E\,max} - V_{S\,min}}{t_{trans}}$$

Cette étape e4) calcule la consigne de régulation $\dot{\theta}_r^d$ selon une droite décroissante initialisée en fonction du signe de la dérivée du glissement, convergeant en une durée prédéfinie $t_{trans}$ d'une vitesse-initiale $V_{Emax}$ vers la valeur $V_{Smin}$ au-dessus de laquelle les roues ne décollent plus, selon l'équation suivante :

$$r\dot{\theta}_r^d = K * t + V_{E\,max} \quad \text{avec} \quad K = \frac{V_{E\,max} - V_{S\,min}}{t_{trans}}$$

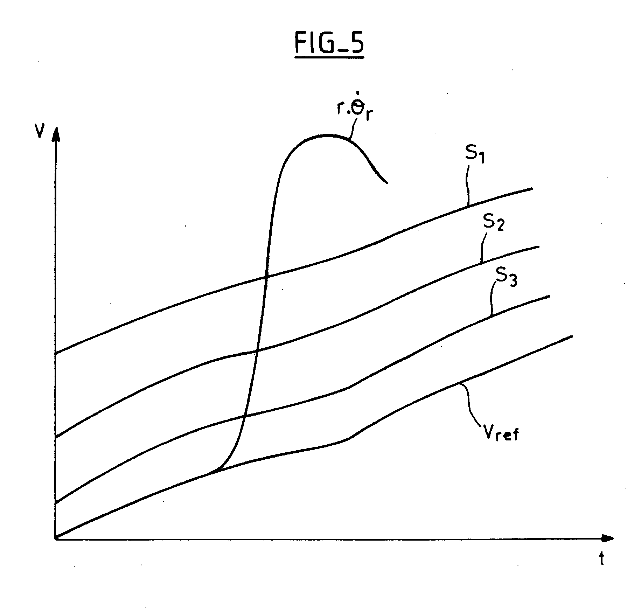

Selon une autre caractéristique de l'invention, au démarrage du véhicule, le procédé applique une régulation du couple moteur en boucle ouverte $B_o$ quand l'écart entre la vitesse des roues de l'essieu moteur et la vitesse du véhicule est inférieur à un deuxième seuil $S_3$, dit de passage en boucle ouverte et que la valeur absolue de la différence entre le couple moteur et la consigne du conducteur est supérieure à un talon $\varepsilon$ de couple minimal, mais dès que l'écart devient supérieur à un troisième seuil $S_2$, le procédé repasse en régulation en boucle fermée, comme le montre l'organigramme de la figure 4. Comme le montre la figure 5 représentant les différents seuils de transition de l'écart $\Delta V$ entre la vitesse des roues de l'essieu moteur et la vitesse du véhicule, entre les modes de régulation du couple moteur, le premier seuil $S_1$ de déclenchement de la régulation en boucle fermée est supérieur au seuil $S_2$ de passage de la régulation en boucle ouverte vers la régulation en boucle fermée, lui-même supérieur au seuil $S_3$ de passage en régulation en boucle ouverte ou de sortie de toute régulation.

Cette régulation en boucle ouverte commande le fonctionnement du moteur, qui délivre un couple réel $T_{et}$. La perturbation $\Delta$ est une modélisation des effets extérieurs qui peuvent agir sur le système et que la commande doit rejeter. La roue qui glissait faiblement est relancée par une action du moteur, en boucle ouverte.

Ces deux modes de régulation sont combinés pour s'adapter aux différentes conditions d'adhérence des roues motrices. Le mode en boucle fermée permet de diminuer le couple moteur appliqué aux roues lorsque le glissement est important, supérieur à un seuil prédéfini et le mode en boucle ouverte augmente à nouveau le couple moteur pour relancer les roues dont le glissement est redevenu faible. Ces deux modes ne réalisent pas de régulation du glissement de façon simultanée, mais successivement en fonction des conditions de glissement pour une meilleure prestation. Cette combinaison des deux modes de régulation est une commutation C, commandée par une fonction logique d'activation, prenant en compte le niveau de l'écart de vitesse entre les roues motrices et le véhicule pour une vitesse de déplacement du véhicule qui soit inférieure à un seuil de quelques km/h.

Comme le montre l'organigramme de la figure 4, en plus des conditions décrites précédemment, les deux modes de régulation, en boucle fermée et en boucle ouverte, sont arrêtés quand les deux conditions simultanées suivantes sont réunies : quand l'écart entre la vitesse $r\dot{\theta}_r$ des roues de l'essieu moteur et la vitesse $V_{ref}$ du véhicule repasse sous le seuil $S_3$ de début de boucle ouverte et que la valeur absolue de la différence entre le couple moteur et la consigne du conducteur est inférieure à un talon $\varepsilon$ de couple minimal.

Le procédé de régulation selon l'invention met en oeuvre, au démarrage du véhicule, deux modes de régulation différents en fonction de l'écart entre la vitesse des roues de l'essieu moteur et la vitesse du véhicule des roues motrices afin de limiter au maximum la mise au point de la commande, de sorte que les performances obtenues sont meilleures que celles des procédés antérieurs pour un réglage simplifié.

Enfin, ce procédé est particulièrement bien adapté aux stratégies d'anti-patinage mises en oeuvre sur des véhicules automobiles à traction, à propulsion, à quatre roues motrices ou hybrides dotés d'actionneurs électriques.

## Revendications

1. Procédé de contrôle du glissement des roues motrices d'un véhicule automobile par régulation du couple moteur, délivré aux roues par l'actionneur du véhicule, dans le cas où elles dépassent un seuil prédéfini de glissement, **caractérisé en ce que**, lors de la détection d'une situation de démarrage à une vitesse inférieure à un seuil défini et sur une route à adhérence symétrique faible, les roues motrices patinent, il applique deux modes de régulation du couple moteur différents selon l'écart entre la vitesse des roues de l'essieu moteur et la vitesse du véhicule ($\Delta V$), soit, dans le cas où l'écart est supérieur à un premier seuil déterminé ($S_1$), un mode de régulation du couple moteur en boucle fermée par asservissement de la vitesse de rotation des roues à une consigne de vitesse déterminée à partir d'une consigne de régime moteur et, dans le cas où l'écart est inférieur à un deuxième seuil déterminé ($S_3$) inférieur au premier seuil et que la valeur absolue de la différence entre le couple moteur et la consigne du conducteur est supérieure à un talon ($\varepsilon$) de couple minimal, un mode de régulation du couple moteur en boucle ouverte.

**2.** Procédé de contrôle du glissement des roues motrices d'un véhicule selon la revendication précédente, **caractérisé en ce que** lorsqu'un mode de régulation de couple moteur en boucle ouverte est appliqué et que l'écart entre la vitesse des roues de l'essieu moteur et la vitesse du véhicule ($\Delta V$), est supérieur à un troisième seuil déterminé ($S_2$,), ledit procédé applique un mode de régulation de couple moteur en boucle fermée.

**3.** Procédé de contrôle du glissement des roues motrices d'un véhicule selon l'une quelconque des revendications précédentes, **caractérisé en ce qu'**il arrête le mode de régulation appliqué quand l'écart entre la vitesse des roues de l'essieu moteur et la vitesse du véhicule ($\Delta V$) repasse sous le seuil ($S_3$) de début de boucle ouverte et que la valeur absolue de la différence entre le couple moteur et la consigne du conducteur est inférieure à un talon ($\varepsilon$) de couple minimal.

**4.** Procédé de contrôle selon la revendication 1, **caractérisé en ce que** la consigne de vitesse de régulation ($\dot{\theta}_r^{\,d}$) des roues motrices varie, pendant la phase de démarrage, selon une droite décroissante initialisée en fonction du signe de la dérivée du glissement, convergeant en un temps prédéfini ($t_{trans}$) d'une vitesse initiale maximale ($V_{Emax}$) vers la valeur ($V_{Smin}$) choisie de telle sorte que le véhicule décolle et ne calle pas, selon l'équation suivante :

$$r\dot{\theta}_r^{\,d} = K * t + V_{E\max} \quad \text{avec} \ K = \frac{V_{E\max} - V_{S\min}}{t_{trans}}$$

**5.** Procédé de contrôle selon la revendication 4, **caractérisé en ce que** le calcul de la consigne ($r\dot{\theta}_r^{\,d}$) de vitesse des roues motrices comprend :

    - une étape e1) d'établissement des conditions de son déclenchement qui sont :

        - la vitesse ($V_{ref}$) du véhicule est inférieure à la consigne ($V_{Smin}$) de vitesse minimale, indiquant que le véhicule est en phase de démarrage,
        - l'indicateur ($TCR_{mode}$) de l'entrée dans une phase de régulation en glissement, à basse vitesse est différent de 1, signifiant qu'aucune régulation n'est déclenchée,
        - la vitesse des roues s'infléchit dans la direction du seuil ($V_{Smin}$) de vitesse, c'est-à-dire que le signe de la dérivée du glissement ($dS_X$), indiquant la tendance du régime des roues motrices par rapport à la vitesse ($V_{ref}$) de référence du véhicule, doit être, soit négatif et la vitesse maximale $V_{Emax}$ de l'essieu moteur doit être supérieure au seuil ($V_{Smin}$) de vitesse, soit positif et la vitesse maximale ($V_{Emax}$) de l'essieu moteur doit être inférieure au seuil ($V_{Smin}$) de vitesse,

        - une étape e2), déclenchée par l'étape précédente, d'initialisation d'un compteur temps pour incrémenter une rampe de décroissance de la vitesse ($\dot{\theta}_r$) de rotation des roues motrices vers le seuil ($V_{Smin}$) de vitesse, la durée maximale ($t_{trans}$) de cette transition entre ces deux valeurs de vitesse étant un paramètre de réglage qui est calibré sur plusieurs scénarii de roulage, sur sol plat comme sur sol en pente notamment,
        - une étape e3) simultanée de mémorisation de la vitesse ($V_{Emax}$) des roues motrices à l'instant du déclenchement du calcul, dit régime initial maximal,
        - une étape e4) de calcul de la pente (K) de la rampe de décroissance de la vitesse ($r\dot{\theta}_r$) des roues motrices vers le seuil ($V_{Smin}$) de vitesse, à partir du régime initial maximal, cette pente (K) étant égale au rapport de la différence entre le régime maximal initial des roues motrices et le seuil ($V_{Smin}$) de vitesse sur la durée de transition ($t_{trans}$) selon l'équation suivante :

$$K = \frac{V_{E\max} - V_{S\min}}{t_{trans}}$$

**6.** Procédé de contrôle selon la revendication 1, **caractérisé en ce que** la combinaison desdits deux modes de régulation du couple moteur ($T_{el}$) est une commutation commandée par une fonction logique d'activation en fonction de l'écart ($\Delta V$) entre la vitesse des roues de l'essieu moteur et la vitesse du véhicule par rapport aux seuils ($S_1$ et $S_3$) de déclenchement de la commande en boucle fermée et de la commande en boucle ouverte, pour une vitesse du véhicule inférieure à un seuil donné, et **en ce que** ces deux modes sont arrêtés quand l'écart diminue sous le seuil ($S_3$) de déclenchement du mode en boucle ouverte et que la valeur absolue de la différence entre le couple moteur et la consigne du conducteur est inférieure à un talon de couple minimal.

**7.** Procédé de contrôle selon la revendication 1, **caractérisé en ce que** la consigne de régime moteur ($V_{S\min}$) est fonction du type de moteur du véhicule, thermique ou électrique.

**Claims**

**1.** Method of controlling spinning of the drive wheels of a motor vehicle by regulating the engine torque, delivered to the wheels by the actuator of the vehicle, in the case where said wheels exceed a predefined spinning threshold, **characterized in that**, upon detection of a starting situation at a speed below a defined threshold and on a road with low symmetrical road grip, if the drive wheels spin, it applies two different engine torque regulation modes depending on the difference between the drive axle wheel speed and the speed of the vehicle ($\Delta V$), either, in the case where the difference is greater than a first determined threshold ($S_1$), a closed loop engine torque regulation mode based on slaving the wheel rotation speed on a speed setpoint determined from an engine speed setpoint or, in the case where the difference is below a second determined threshold ($S_3$) below the first threshold and the absolute value of the difference between the engine torque and the driver setpoint is greater than a minimum torque reference ($\varepsilon$), an open loop engine torque regulation mode.

**2.** Method of controlling the spinning of the drive wheels of a vehicle according to the preceding claim, **characterized in that**, when an open loop engine torque regulation mode is applied and the difference between the drive axle wheel speed and the speed of the vehicle ($\Delta V$) is above a third determined threshold ($S_2$), said method applies a closed loop engine torque regulation mode.

**3.** Method of controlling the spinning of the drive wheels of a vehicle according to any one of the preceding claims, **characterized in that** it stops the regulation mode applied when the difference between the drive axle wheel speed and the speed of the vehicle ($\Delta V$) returns above the open loop start threshold ($S_3$) and the absolute value of the difference between the engine torque and the driver setpoint is less than a minimum torque reference ($\varepsilon$).

**4.** Control method according to Claim 1, **characterized in that** the drive wheel regulation speed setpoint ($\dot{\theta}_r^d$) varies, during the starting phase, according to a decreasing straight line initialized as a function of the sign of the drift of wheel spin, converging within a predefined time ($t_{trans}$) from a maximum initial speed ($V_{E\max}$) toward the value ($V_{S\min}$) chosen so that the vehicle takes off and does not stall, according to the following equation:

$$r\dot{\theta}_r^d = K * t + V_{E\max} \quad \text{with} \quad K = \frac{V_{E\max} - V_{S\min}}{t_{trans}}$$

**5.** Control method according to Claim 4, **characterized in that** the calculation of the drive wheel speed setpoint ($r\dot{\theta}_r^d$) comprises:

    - a step e1) for establishing its triggering conditions which are:

- the speed ($V_{ref}$) of the vehicle is below the minimum speed setpoint ($v_{Smin}$), indicating that the vehicle is in the starting phase,
- the indicator ($TCR_{mode}$) indicating entry into a wheel spin regulation phase, at low speed, is different from 1, signifying that no regulation is triggered,
- the speed of the wheels is modified in the direction of the speed threshold ($V_{Smin}$), that is to say that the sign of the wheel spin drift ($dS_X$), indicating the trend of the speed of the drive wheels relative to the reference speed ($V_{ref}$) of the vehicle, should be either negative and the maximum drive axle speed $V_{Emax}$ should be above the speed threshold ($V_{Smin}$), or positive and the maximum drive axle speed ($V_{Emax}$) should be below the speed threshold ($V_{Smin}$),

- a step e2), triggered by the preceding step, for initialization of a time counter to increment a drive wheel rotation speed ($\dot{\theta}_r$) decreasing ramp toward the speed threshold ($V_{Smin}$), the maximum duration ($t_{trans}$) of this transition between these two speed values being a setting parameter that is calibrated over a number of rolling scenarios, on flat ground and on sloping ground in particular,
- a simultaneous step e3) for storing the speed ($V_{Emax}$) of the drive wheels at the instant when the calculation is triggered, called maximum initial speed,
- a step e4) for calculating the slope (K) of the drive wheel speed ($r\dot{\theta}_r$) decreasing ramp toward the speed threshold ($V_{Smin}$), from the maximum initial speed, this slope (K) being equal to the ratio of the difference between the initial maximum speed of the drive wheels and the speed threshold ($V_{Smin}$) over the transition time ($t_{trans}$), according to the following equation:

$$K = \frac{V_{E\,max} - V_{S\,min}}{t_{trans}}$$

6. Control method according to Claim 1, **characterized in that** the combination of said two engine torque regulation modes ($T_{el}$) is a switchover ordered by an activation logic function based on the difference ($\Delta V$) between the speed of the drive axle wheels and the speed of the vehicle relative to the thresholds ($S_1$ and $S_3$) for triggering closed loop control and open loop control, for a vehicle speed below a given threshold, and **in that** these two modes are stopped when the difference falls below the threshold ($S_3$) for triggering the open loop mode and the absolute value of the difference between the engine torque and the driver setpoint is below a minimum torque reference.

7. Control method according to Claim 1, **characterized in that** the engine speed setpoint ($V_{Smin}$) is a function of the vehicle's engine type, heat engine or electric engine.

**Patentansprüche**

1. Verfahren zur Steuerung des Schlupfs der Antriebsräder eines Kraftfahrzeugs durch Regelung des Drehmoments, das vom Stellglied des Fahrzeugs an die Räder geliefert wird, in dem Fall, in dem sie einen vordefinierten Schlupfschwellwert überschreiten, **dadurch gekennzeichnet, dass** es bei der Erfassung einer Startsituation mit einer Geschwindigkeit unter einem definierten Schwellwert und auf einer Straße mit schwachem symmetrischem Kraftschluss, wenn die Antriebsräder durchdrehen, zwei unterschiedliche Regelungsarten des Drehmoments anwendet, je nach der Abweichung zwischen der Geschwindigkeit der Räder der Antriebsachse und der Geschwindigkeit des Fahrzeugs ($\Delta V$), d.h. in dem Fall, in dem die Abweichung größer als ein erster bestimmter Schwellwert ($S_1$) ist, eine Regelungsart des Drehmoments in geschlossener Schleife durch Regelung der Drehgeschwindigkeit auf einen Geschwindigkeitssollwert, der ausgehend von einem Drehzahlsollwert bestimmt wird, oder in dem Fall, in dem die Abweichung geringer als ein zweiter bestimmter Schwellwert ($S_3$) unter dem ersten Schwellwert ist, und der Absolutwert der Differenz zwischen dem Drehmoment und der Anweisung des Fahrers größer als ein Mindestdrehmomentrest ($\varepsilon$) ist, eine Regelungsart des Drehmoments in offener Schleife.

2. Verfahren zur Steuerung des Schlupfs der Antriebsräder eines Fahrzeugs nach dem vorhergehenden Anspruch, **dadurch gekennzeichnet, dass**, wenn eine Drehmoment-Regelungsart in offener Schleife angewendet wird, und wenn die Abweichung zwischen der Geschwindigkeit der Räder der Antriebsachse und der Geschwindigkeit des Fahrzeugs ($\Delta V$) höher als ein dritter bestimmter Schwellwert ($S_2$) ist, das Verfahren eine Drehmoment-Regelungsart in geschlossener Schleife anwendet.

3. Verfahren zur Steuerung des Schlupfs der Antriebsräder eines Fahrzeugs nach einem der vorhergehenden Ansprüche, **dadurch gekennzeichnet, dass** es die angewendete Regelungsart beendet, wenn die Abweichung zwischen der Geschwindigkeit der Räder der Antriebsachse und der Geschwindigkeit des Fahrzeugs ($\Delta V$) wieder unter den Schwellwert ($S_3$) des Beginns einer offenen Schleife geht, und wenn der Absolutwert der Differenz zwischen dem Drehmoment und der Anweisung des Fahrers geringer als ein Mindestdrehmomentrest ($\varepsilon$) ist.

4. Steuerungsverfahren nach Anspruch 1, **dadurch gekennzeichnet, dass** der Regelungsgeschwindigkeit-Sollwert ($\dot{\theta}_r^d$) der Antriebsräder während der Startphase gemäß einer abnehmenden Geraden variiert, die in Abhängigkeit vom Vorzeichen der Ableitung des Schlupfs initialisiert wird, indem sie in einer vordefinierten Zeit ($t_{trans}$) von einer maximalen Anfangsgeschwindigkeit ($V_{Emax}$) zu dem gewählten Wert ($V_{Smin}$) konvergiert, derart, dass das Fahrzeug losfährt und nicht blockiert, gemäß der folgenden Gleichung:

$$r\dot{\theta}_r^d = K * t + V_{E\max} \quad \mathrm{mit} \quad K = \frac{V_{E\max} - V_{S\min}}{t_{trans}}$$

5. Steuerungsverfahren nach Anspruch 4, **dadurch gekennzeichnet, dass** die Berechnung des Geschwindigkeitssollwerts ($r\dot{\theta}_r^d$) der Antriebsräder enthält:

- einen Schritt e1) der Herstellung der Bedingungen für ihr Auslösen, die sind:

- die Geschwindigkeit ($V_{ref}$) des Fahrzeugs ist geringer als der Mindest-Geschwindigkeitssollwert ($V_{Smin}$), was anzeigt, dass das Fahrzeug in der Startphase ist,
- die Anzeige ($TCR_{mode}$) des Eintritts in eine Schlupfregelungsphase bei niedriger Geschwindigkeit ist anders als 1, was bedeutet, dass keine Regelung ausgelöst wird,
- die Geschwindigkeit der Räder geht in Richtung des Geschwindigkeitsschwellwerts ($V_{Smin}$), d.h., dass das Vorzeichen der Ableitung des Schlupfs ($dS_X$), das die Tendenz der Drehzahl der Antriebsräder bezüglich der Bezugsgeschwindigkeit ($V_{ref}$) des Fahrzeugs anzeigt, entweder negativ und die maximale Geschwindigkeit $V_{Emax}$ der Antriebsachse höher als der Geschwindigkeitsschwellwert ($V_{Smin}$) sein muss, oder positiv und die maximale Geschwindigkeit ($V_{Emax}$) der Antriebsachse geringer als der Geschwindigkeitsschwellwert ($V_{Smin}$) sein muss,

- einen Schritt e2), der vom vorhergehenden Schritt ausgelöst wird, der Initialisierung eines Zeitzählers, um eine Abfallrampe der Drehgeschwindigkeit ($\dot{\theta}_r$) der Antriebsräder zum Geschwindigkeitsschwellwert ($V_{Smin}$) zu inkrementieren, wobei die maximale Dauer ($t_{trans}$) dieses Übergangs zwischen diesen zwei Geschwindigkeitswerten ein Regelungsparameter ist, der für mehrere Fahrszenarien kalibriert ist, insbesondere sowohl auf flachem Boden als auch auf geneigtem Boden,
- einen gleichzeitigen Schritt e3) des Speicherns der Geschwindigkeit ($V_{Emax}$) der Antriebsräder im Augenblick des Auslösens des Rechenvorgangs, maximale Anfangsdrehzahl genannt,
- einen Schritt e4) der Berechnung der Neigung (K) der Abfallrampe der Geschwindigkeit ($r\dot{\theta}_r$) der Antriebsräder zum Geschwindigkeitsschwellwert ($V_{Smin}$), ausgehend von der maximalen Anfangsdrehzahl, wobei diese Neigung (K) gleich dem Verhältnis der Differenz zwischen der maximalen Anfangsdrehzahl der Antriebsräder und dem Geschwindigkeitssollwert ($V_{Smin}$) über die Übergangsdauer ($t_{trans}$) gemäß der folgenden Gleichung ist:

$$K = \frac{V_{E\max} - V_{S\min}}{t_{trans}}$$

6. Steuerungsverfahren nach Anspruch 1, **dadurch gekennzeichnet, dass** die Kombination der zwei Regelungsarten des Drehmoments ($T_{el}$) eine von einer logischen Aktivierungsfunktion in Abhängigkeit von der Abweichung ($\Delta V$) zwischen der Geschwindigkeit der Räder der Antriebsachse und der Geschwindigkeit des Fahrzeugs bezüglich der

Schwellwerte ($S_1$ und $S_3$) des Auslösens der Steuerung in geschlossener Schleife und der Steuerung in offener Schleife für eine Geschwindigkeit des Fahrzeugs unterhalb eines gegebenen Schwellwerts gesteuerte Umschaltung ist, und dass diese zwei Regelungsarten beendet werden, wenn die Abweichung unter den Schwellwert ($S_3$) der Betriebsart in offener Schleife abnimmt und der Absolutwert der Differenz zwischen dem Drehmoment und der Anweisung des Fahrers geringer als ein Mindestdrehmomentrest ist.

7.  Steuerungsverfahren nach Anspruch 1, **dadurch gekennzeichnet, dass** der Drehzahlsollwert ($V_{Smin}$) von der Art des Motors des Fahrzeugs, Verbrennungsmotor oder Elektromotor, abhängt.

## FIG_1

## FIG_4

FIG_2

FIG_3

FIG_5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2838385

- DE 10239120 A1